# EUROPEAN PATENT APPLICATION

(11) **EP 3 579 133 A1**
(43) Date of publication of application: **11.12.2019**
(21) Application number: 19172430.1
(22) Date of filing: 03.05.2019
(51) Int. Cl.: G06F 21/45, G06F 11/36, G06F 21/57, G06F 21/12

(54) **SOFTWARE SECURITY VULNERABILITY EVALUATING APPARATUS**

(30) Priority: 04.06.2018 JP 2018106764
(71) Applicant: YAZAKI CORPORATION, Minato-ku, Tokyo 108-8333 (JP)
(72) Inventor: MAEKAWA, Yosuke, Susono-shi, Shizuoka 410-1194 (JP); SANO, Shigeki, Susono-shi, Shizuoka 410-1194 (JP); SAJI, Hiroaki, Susono-shi, Shizuoka 410-1194 (JP); KOMATSU, Yoichi, Susono-shi, Shizuoka 410-1194 (JP)
(74) Representative: Grünecker Patent- und Rechtsanwälte PartG mbB

(57) **Abstract**

A security vulnerability evaluating apparatus which can automatically perform exhaustive vulnerability evaluation with respect to a protected property of an information system is provided. A design specification of a product with a built-in computer is inputted to a specification input part (21). A design model producing part (31) produces a design model indicating an operation of the product and data used in the product, based on the design specification inputted by the specification input part (21). A property input part (23) inputs a protected property of the product and a protection state of the protected property. A protection state model producing part (32) produces a protection state model by extracting, out of the design model produced by the design model producing part (31), an operation portion associated with the protected property inputted by the property input part (23). A determination part (41) determines, based on the protection state model, whether or not there exists a state to violate the protection state of the protected property.

## Description

### Technical Field

The present invention relates to a vulnerability evaluating apparatus.

### Background

As a method of detecting security vulnerability existing in an information system integrated into a computer, ones disclosed in Patent Documents 1 and 2 listed below have been proposed.

Patent Document 1 proposes a system that automatically selects inspection data suited to an operating system of an audited computer with referring to a database constituted of security bug information and such, and detects security vulnerability existing in the audited computer using the inspection data.

Patent Document 2 proposes a method of detecting vulnerabilities of 3 types, namely, overflow, race condition and privileges escalation, by statically analyzing a source code.

The method described in Patent Document 1 has a problem that it cannot detect security vulnerability for a customized software and such that is not registered in the database. The method described in Patent Document 2 has a problem that it cannot detect vulnerability of types other than the overflow, the race condition and the privileges escalation. Moreover, attacks against the information systems including integrated systems have been increasing, and therefore exhaustive security vulnerability detection is becoming increasingly important.

### Patent Documents

Patent Document 1: JP 2002-157221 A
Patent Document 2: JP 2006-523898 A

### Summary of the Invention

In view of the above-described problems, an object of the present invention is to provide a vulnerability evaluating apparatus that can perform exhaustive vulnerability evaluation.

One embodiment of the present invention provides a vulnerability evaluating apparatus including: a specification input part to which a design specification of a product with a built-in computer is inputted; a design model producing part configured to produce a design model indicating an operation of the product and data used in the product, based on the design specification inputted by the specification input part; a property input part configured to input a protected property of the product and a protection state of the protected property; a protection state model producing part configured to produce a protection state model by extracting, out of the design model produced by the design model producing part, an operation portion associated with the protected property inputted by the property input part; and a determination part configured to determine, based on the protection state model, whether or not there exists a state to violate the protection state of the protected property.

Another embodiment of the present invention provides a vulnerability evaluating apparatus including: a design model input part to which a design model indicating an operation of a product with a built-in computer and data used in the product is inputted; a property input part configured to input a protected property of the product and a protection state of the protected property; a protection state model producing part configured to produce a protection state model by extracting, out of the design model inputted by the design model input part, an operation portion associated with the protected property inputted by the property input part; and a determination part configured to determine, based on the protection state model, whether or not there exists a state to violate the protection state of the protected property.

Further, the vulnerability evaluating apparatus may further include an input producing part configured to produce an input to the product that leads to the state to violate the protection state of the protected property, if the determination part determines that there exists the state to violate the protection state of the protected property.

Further, the vulnerability evaluating apparatus may further include an output part configured to output the design model, wherein the property input part is configured to select and input the protected property from the operation of the product and the data used in the product indicated by the design model outputted to the output part.

Further, the property input part may be configured to select and input the operation that affects the protection state from the operations indicated by the design model outputted to the output part, and may be configured to input, as the protection state, a state of the protected property after the selected operation is performed indicating that the protected property is protected.

Further, the design model may be constituted of an operation flow or a state transition diagram, and the protection state model producing part may produce a protection state model by extracting, out of the operation flow or the state transition diagram, an initial state to the operation selected by the property input part, and the determination part may be configured to determine, based on the extracted protection state model, that there exists the state to violate the protection state if there is a state departing from the protection state of the protected property.

Further, the input producing part may be configured to compute a range of value that each field of an input frame to the product may take when it leads to the state to violate the protection state of the protected property.

According to the present invention, vulnerability can be evaluated regarding the protected property of the product and the protection state of the protected property inputted to the property input part, allowing evaluation for various protected properties and the protection states, thereby performing exhaustive vulnerability evaluation.

### Brief Description of the Drawings

FIG. 1 is a function block diagram showing one embodiment of a vulnerability evaluating apparatus of the present invention;
FIG. 2 is a flowchart showing one example of a design model produced by a design model producing part shown in FIG. 1;
FIG. 3 is a state transition diagram showing one example of a design model produced by the design model producing part shown in FIG. 1;
FIG. 4 shows a flowchart and a state transition diagram associated to each other showing one example of a design model produced by the design model producing part shown in FIG. 1;
FIG. 5 shows a format of an input message to be inputted to an actual machine;
FIG. 6 is a flowchart showing one example of a protection state model produced by a protection state model producing part shown in FIG. 1;
FIG. 7 is a state transition diagram showing one example of a protection state model produced by the protection state model producing part shown in FIG. 1;
FIG. 8 shows one example of an input message produced by an input producing part shown in FIG. 1;
FIG. 9 is a function block diagram showing a vulnerability evaluating apparatus according to another embodiment; and
FIG. 10 is a function block diagram showing a vulnerability evaluating apparatus according to yet another embodiment.

### Detailed Description of the Exemplary Embodiments

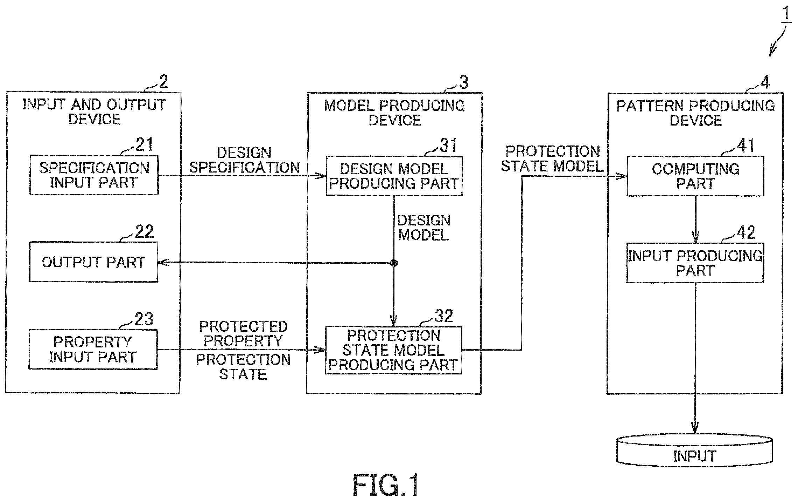

In the following, one embodiment of the present invention will be explained with reference to FIG. 1. A vulnerability evaluating apparatus shown in FIG. 1 is an apparatus configured to evaluate security vulnerability of an integrated system product (an actual machine) with a built-in computer. As shown in FIG. 1, a vulnerability evaluating apparatus 1 is constituted of an input and output device 2, a model producing device 3 and a pattern producing device 4.

The input and output device 2 includes a specification input part 21, an output part 22 and a property input part 23.

The specification input part 21 is constituted of an operation part such as a keyboard, a mouse and/or a touch panel, and design specification of the actual machine is to be inputted to the specification input part 21. As the design specification, a format of an input (data) and an operation of the actual machine and such are inputted. As the operation of the actual machine, for example, various functions to be performed by the actual machine to produce a design model and relationship between them, various states of the actual machine and relationship between them and such, are inputted.

The design specification needs to be inputted in a form understandable to the later-described model producing device (i.e., a format description). However, a language called a format description is often difficult to understand, and it would be difficult to demand a user for the format description language. This embodiment is configured to allow a document described in a natural language to be inputted as the design specification, and has a built-in function to convert the document inputted to the input and output device and the model producing device into the format description. Of course, it may be configured to allow the design specification to be inputted using the format description language.

The output part 22 is constituted of a display part such as a touch panel, and is configured to display to a user the design model (including a flowchart and/or a state transition diagram and/or such) indicating an operation of the product produced by the model producing device 3 as described later.

The property input part 23 is constituted of an operation part such as a keyboard, a mouse and/or a touch panel, and inputs a protected property of the actual machine and a protection state of this protected property. The property input part 23 can select and input the protected property from, for example, input data displayed on the output part 22 as the design model. Further, the property input part 23 can select transition of various functions and/or various states displayed on the display part as the design model, and, can define and input, as the protection state, a state of the protected property after the transition of the selected operation and/or state is performed indicating that the protected property is protected. Herein, the protected property and the protection state may be freely inputted by a user using a document.

The model producing device 3 includes a design model producing part 31 and a protection state model producing part 32.

A known microcomputer having a ROM, a RAM and a CPU functions as the design model producing part 31. The design model producing part 31 produces the design model indicating an operation of the product, such as a data format, a flowchart and/or a state transition diagram, based on the design specification inputted by the specification input part 21. The design model producing part 31 outputs the produced design model to the output part 22.

The protection state model producing part 32 produces a protection state model by extracting an operation portion associated with the protected property inputted by the property input part 23 out of the design model produced by the design model producing part 31. Specifically, the protection state model producing part 32 extracts, from the design model (i.e., the operation flow, the state transition diagram), an initial state to the operation and/or state selected by the property input part 23 to define the protection state, and sets the extracted portion as the protection state model.

The pattern producing device 4 includes a computing part 41 and an input producing part 42.

The computing part 41 as a determination part determines, based on the protection state model, whether or not it leads to a state that violates the protection state of the protected property. Specifically, the computing part 41 determines that there exists the state to violate the protection state of the protected property, if the protection state model includes a state departing from the protection state of the protected property, or if the protection state model does not include an operation to ensure the protection state.

If the computing part 41 has determined that there exists the state to violate the protection state of the protected property, the input producing part 42 produces an input to the product that leads to the state to violate the protection state of the protected property, and outputs it.

Next, the following will explain an operation of the above-described vulnerability evaluating apparatus 1 with specific examples of the design specification, the protected property and the protection state. The examples of the design specification, the protected property and the protection state of the actual machine are indicated below.

### <Example of design specification>

Receive a message, perform password authentication, and, if the authentication is succeeded, rewrite data and transmit a success message. Reception of a message is repeated.

### <Example of protected property>

### Rewritten data.

### <Example of protection state>

Writing a correct "rewritten data" by "data rewrite" function.

Firstly, a user inputs an operation (i.e., design specification) of the actual machine using the specification input part 21. Specifically, the user inputs various functions and relationships between the functions to produce a flowchart as one design model. In the above-described example of the design specification, the user inputs the following functions and relationships as the design specification.

### <Design specification of functions>

- Message receiving function
- Password authentication function
- Data rewrite function
- Success message transmitting function

### <Design specification of relationships between functions>

- After start, transit to the message receiving function.
- After the execution of the message receiving function, execute the password authentication function.
- After the password authentication is succeeded, execute the data rewrite function.
- After the password authentication is failed, return to the message receiving function.
- After the execution of the data rewrite function, return to the success message transmitting function.
- After the execution of the success message transmitting function, execute the message receiving function.

Further, the user inputs various states and relationships between the states to produce a state transition diagram as one design model, using the specification input part 21. In the above-described example of the design specification, the user inputs the following states and relationships as the design specification.

### <Design specification of states>

- Message reception waiting state
- Password authentication state
- Data rewrite state
- Message transmission state

### <Design specification of relationships between states>

- After "start", transit to "message reception waiting state".
- When a message is received in "message reception waiting state", transit to "password authentication state".
- If the password is matched in "password authentication state", transit to "data rewrite state".
- If the password is not matched in "password authentication state", transit to "message reception waiting state".
- When the data rewriting is completed in "data rewrite state", transit to "message reception waiting state".
- When the message transmission is completed in "message transmission state", transmit to "message reception waiting state".

At this time, the user also inputs information associating the input functions with the input states, using the specification input part 21. Further, the user inputs a format of an input message (i.e., an input) as described below.

### <Format of the input message>

- Includes an address
- Includes rewritten data
- Includes a password

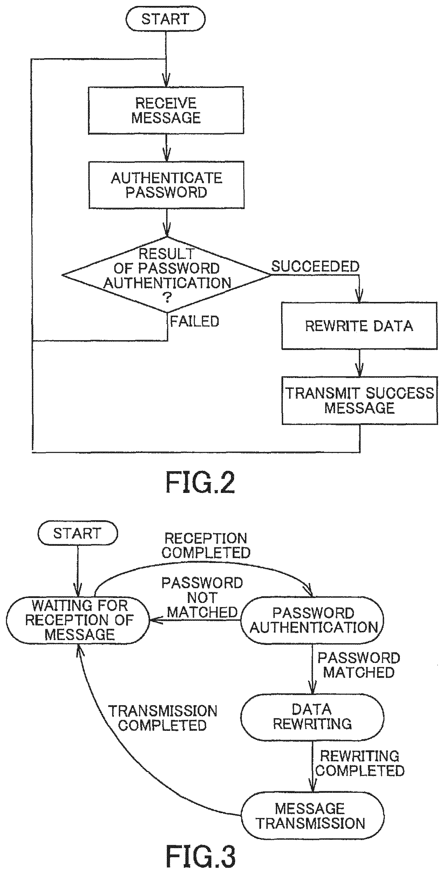

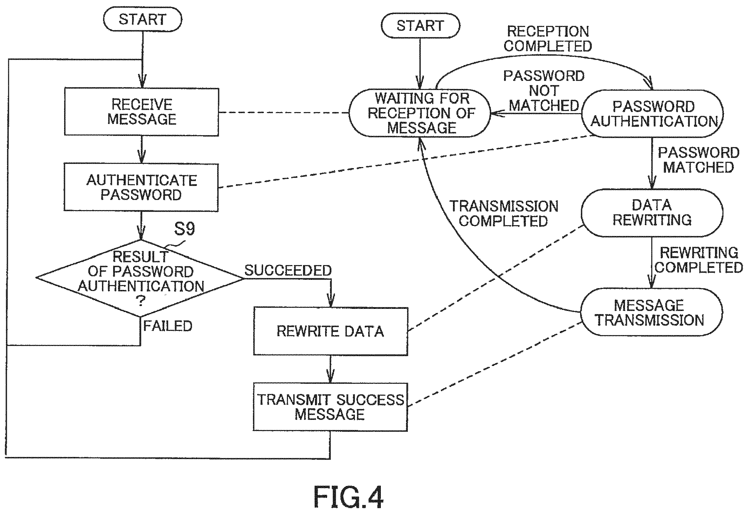

After the design specification is inputted, the design model producing part 31 of the model producing device 3 produces, based on the design specification, a flowchart shown in FIG. 2 and/or a state transition diagram shown in FIG. 3, as the design model. As shown in FIG. 4, the design model producing part 31 may associate the functions of the flowchart with the states of the state transition diagram.

The design model producing part 31 outputs the produced design model to the output part 22. As such, the output part 22 displays (i.e., outputs) the flowchart, the state transition and the input message diagram set as the design model.

Subsequently, the user inputs the protected property and the protection state of the protected property using the property input part 23. The user can input the protected property and the protection state by selecting from the flowchart, the state transition diagram and the input message displayed on the output part 22. In the above-described example of the protected property, the user selects the rewritten data from the displayed data format of the input message and inputs it as the protected property.

Further, the user selects and manipulates "data rewrite" function/state in the flowchart and the state transition diagram. Then, the user inputs, e.g. using a document, that the rewritten data is correct in the selected function/state, thereby defining the protection state.

Next, based on the inputted protected property and the protection state, the protection state model producing part 32 of the model producing device 3 extracts, out of the design model, an operation portion associated with the protected property (i.e., an operation portion that may possibly affect the protected property) as a protection state model.

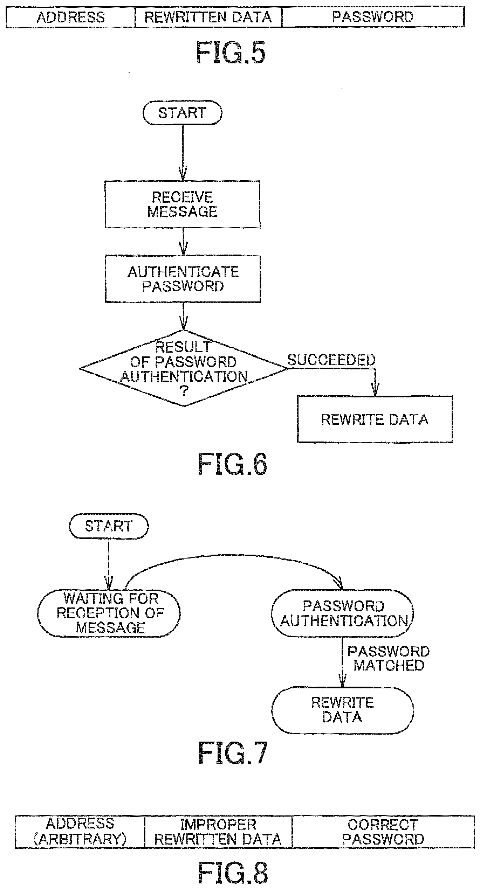

Specifically, the protection state model producing part 32 produces the protection state model including from the start (i.e., the initial state) to the "data rewrite" function/state selected by the property input part 23 during the input of the protection state. As such, the flowchart/state transition diagram as shown in FIG. 6/FIG.7 is produced as the protection state model.

The computing part determines, based on the protection state model produced by the protection state model producing part, whether or not there exists the state to violate the protection state of the protected property. Specifically, if the protection state model does not include a function/state to check the protection state of the protected property (i.e., check that the rewritten data is correct), then the computing part determines that there exists the state to violate the protection state of the protected property.

If the computing part 41 determines that there exists the state to violate the protection state of the protected property, then the input producing part 42 produces an input to the product that leads to the state to violate the protection state of the protected property. In a specific example, the input is an input message shown in FIG. 5. The input producing part 42 takes a look at a target information out of the respective information (i.e., respective fields; in the example shown in FIG. 5, that are address, rewritten data, password) included in the input message (i.e., input frame) other than "rewritten data" which is the protected property (i.e., the target information being address, password), and takes a look at in what condition of the target information the data rewrite function/operation can be reached.

Firstly, the input producing part 42 takes a look at the address of the input message. The input producing part 42 sets the address as an arbitrary value, because an operation that refers to the address is not performed in the protection state.

Next, the input producing part 42 takes a look at the password. Since in the protection state model, "data rewrite" can be performed only when the password is a correct password with which the determination of password matched is made in the password authentication, the input producing part 42 sets the password as the correct password.

Next, since the defined protection state is the data being rewritten to the correct rewritten data in the "data rewrite" function/state, the input producing part 42 determines that a state of incorrect (improper) rewritten data being written is "state to violate the protection state of the protected property", and sets the rewritten data as the improper rewritten data.

As such, as shown in FIG. 8, the input producing part 42 can produce and output the input message having the arbitrary address, the improper rewritten data and the correct password. The user can input the input message produced by the input producing part 42 to the actual machine to evaluate the vulnerability of the actual machine.

The input producing part 42 may be configured to compute a range of value that each information of the input message to the product may take when the information leads to the state to violate the protection state of the protected property, and produce a plurality of input messages falling within that range.

According to the embodiments described above, the evaluation of vulnerability with respect to the protected property of the actual machine and the protection state of this protected property inputted to the property input part 23 can be performed. Consequently, by changing the protected property and/or the protection state to be inputted, various protection properties and/or protection states can be evaluated, thereby performing exhaustive vulnerability evaluation.

According to the above-described embodiment, if the computing part 41 determines that there exists the state to violate the protection state of the protected property, then the input producing part 42 produces the input message to the actual machine that leads to the state to violate the protection state of the protected property. As such, the vulnerability evaluation can be performed by inputting the input message to the actual machine, thus the vulnerability evaluation can be performed accurately.

According to the above-described embodiment, the property input part 23 can select and input the protected property from the operation of the actual machine and the data used in the actual machine indicated by the design model that is outputted (i.e., displayed) on the output part 22. As such, the protected property can be inputted easily.

According to the above-described embodiment, the property input part 23 can select and input the operation that affects the protection state from the operations indicated by the design model outputted (i.e., displayed) on the output part 22, and can input, as the protection state, a state of the protected property after the selected operation is performed indicating that the protected property is protected. As such, the protection state can be inputted easily.

According to the above-described embodiment, the protection state model producing part 32 produces the protection state model including the initial state to the operation selected by the property input part 23 that are extracted out of the flowchart or the state transition diagram, and, based on the extracted protection state model, if there is no state to check the protection state of the protected property, the computing part 41 determines that there exists the state to violate the protection state of the protected property. As such, determination of whether or not there exists the state to violate the protection state can be made easily.

In the above-described embodiment, the initial state to the "data rewrite" function/state selected by the property input part 23 are extracted as the protection state model. However, the present invention is not limited to this. Additionally, function/state portion that forms a loop including "data rewrite" function/state may also be extracted as the protection state model.

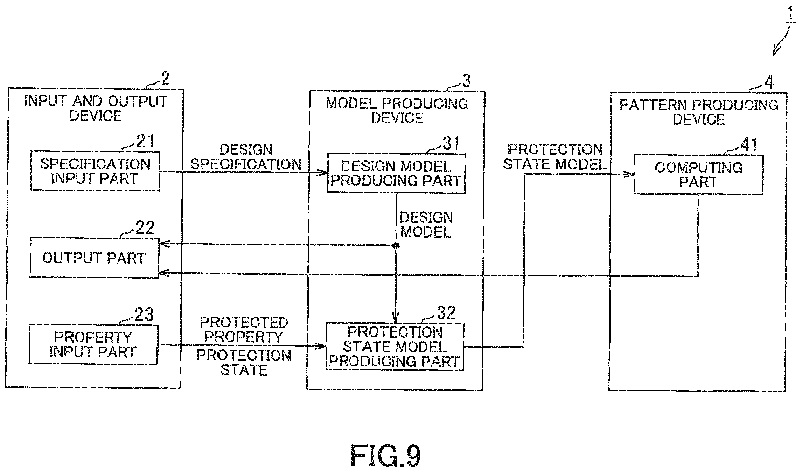

Furthermore, in the above-described embodiment, the input producing part 42 is configured to produce the input message that leads to the state to violate the protection state. However, the present invention is not limited to this. The input producing part 42 is not essential. For example, as shown in FIG. 9, the input producing part 42 may be omitted, and the computing part 41 may be configured to output (display) the determination result from (on) the output part 22. As such, the user can evaluate the vulnerability of the inputted protected property and protection state, and can e.g. adjust a program of the actual machine.

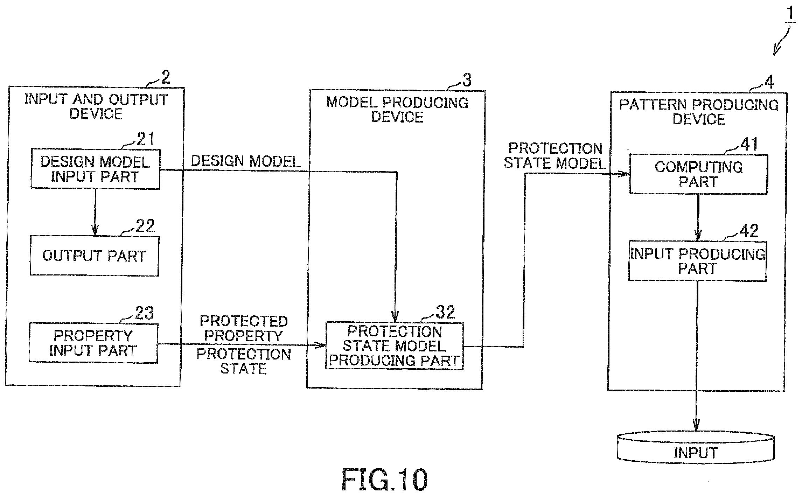

Furthermore, in the above-described embodiment, the design model producing part 31 produces the design model based on the design specification inputted by the specification input part 21. However, the present invention is not limited to this. For example, as shown in FIG. 10, the specification input par 21 and the design model producing part 31 may be omitted, and instead a design model input part 24 configured to allow the user to input the design model may be provided. In this case, the output part 22 displays the design model inputted by the design model input part 24.

The present invention is not limited to the above-described embodiments, and various changes and modifications may be made without departing from the scope of the present invention.

### List of Reference Signs

- 1: vulnerability evaluating apparatus
- 21: specification input part
- 22: output part
- 23: property input part
- 24: design model input part
- 31: design model producing part
- 32: protection state model producing part
- 41: computing part (determination part)
- 42: input producing part

## Claims

1. A vulnerability evaluating apparatus comprising:
a specification input part to which a design specification of a product with a built-in computer is inputted;
a design model producing part configured to produce a design model indicating an operation of the product and data used in the product, based on the design specification inputted by the specification input part;
a property input part configured to input a protected property of the product and a protection state of the protected property;
a protection state model producing part configured to produce a protection state model by extracting, out of the design model produced by the design model producing part, an operation portion associated with the protected property inputted by the property input part; and
a determination part configured to determine, based on the protection state model, whether or not there exists a state to violate the protection state of the protected property.

2. A vulnerability evaluating apparatus comprising:
a design model input part to which a design model indicating an operation of a product with a built-in computer and data used in the product is inputted;
a property input part configured to input a protected property of the product and a protection state of the protected property;
a protection state model producing part configured to produce a protection state model by extracting, out of the design model inputted by the design model input part, an operation portion associated with the protected property inputted by the property input part; and
a determination part configured to determine, based on the protection state model, whether or not there exists a state to violate the protection state of the protected property.

3. The vulnerability evaluating apparatus according to claim 1 or 2, further comprising an input producing part configured to produce an input to the product that leads to the state to violate the protection state of the protected property, if the determination part determines that there exists the state to violate the protection state of the protected property.

4. The vulnerability evaluating apparatus according to any one of claims 1 to 3, further comprising an output part configured to output the design model,
wherein the property input part is configured to select and input the protected property from the operation of the product and the data used in the product indicated by the design model outputted to the output part.

5. The vulnerability evaluating apparatus according to claim 4,
wherein the property input part is configured to select and input the operation that affects the protection state from the operations indicated by the design model outputted to the output part, and is configured to input, as the protection state, a state of the protected property after the selected operation is performed indicating that the protected property is protected.

6. The vulnerability evaluating apparatus according to claim 4,
wherein the design model is constituted of an operation flow or a state transition diagram,
wherein the protection state model producing part produces a protection state model by extracting, out of the operation flow or the state transition diagram, an initial state to the operation selected by the property input part, and
wherein the determination part determines, based on the extracted protection state model, that there exists the state to violate the protection state if there is a state departing from the protection state of the protected property.
